# EUROPÄISCHE PATENTSCHRIFT

(11) **EP 3 812 327 B1**
(45) Veröffentlichungstag und Bekanntmachung des Hinweises auf die Patenterteilung: **14.06.2023**
(21) Anmeldenummer: 20202931.0
(22) Anmeldetag: 21.10.2020
(51) Int. Cl.: B65H 54/52, B65H 54/553, B65H 54/28

(54) **TEXTILMASCHINE**
TEXTILE MACHINE
MACHINE TEXTILE

(30) Priorität: 23.10.2019 DE 102019128612
(43) Veröffentlichungstag der Anmeldung: 28.04.2021
(73) Patentinhaber: Saurer Spinning Solutions GmbH & Co. KG, 52531 Übach-Palenberg (DE)
(72) Erfinder: Burchert, Mathias, 73760 Ostfildern (DE)
(74) Vertreter: Schniedermeyer, Markus

(56) Entgegenhaltungen:
- EP-A1- 0 265 995
- EP-A2- 2 179 956
- WO-A1-97/33024
- DE-A1-102009 004 617

## Beschreibung

Die Erfindung betrifft eine Textilmaschine mit Komponenten zur Verarbeitung von Fasern oder Garnen.

Solche Textilmaschinen sind zum Beispiel Kreuzspulen herstellende Textilmaschinen. Kreuzspulen herstellende Textilmaschinen, bspw. Offenend-Rotorspinnmaschinen, Luftspinnmaschinen oder Kreuzspulautomaten, weisen eine Spulvorrichtung mit einem schwenkbar gelagerten Spulenrahmen zur Aufnahme einer Kreuzspule, einer Antriebswalze zur reibschlüssigen Rotation der Kreuzspule und einer Fadenchangiereinrichtung auf.

Bekanntlich treten an den Spulenrahmen der Arbeitsstellen von Kreuzspulen herstellenden Textilmaschinen, wenn keine entsprechenden Gegenmaßnahmen getroffen werden, während des Spulbetriebes oft relativ starke Schwingungen auf. Das heißt, insbesondere zu Beginn einer Spulenreise sowie bei der Herstellung relativ harter Kreuzspulen besteht die Gefahr, dass die Amplitude der Rahmenschwingung so groß wird, dass der Spulprozess entscheidend beeinträchtigt wird und Kreuzspulen gefertigt werden, die später kaum noch abspulbar und damit unbrauchbar sind.

Um das Auftreten solcher Rahmenschwingungen möglichst zu vermeiden bzw. zu minimieren, wurden die Spulvorrichtungen von Kreuzspulen herstellenden Textilmaschinen deshalb in der Vergangenheit oft jeweils mit einer Dämpfungseinrichtung ausgestattet, die gewährleisten soll, dass während der gesamten Spulenreise eine ausreichende Dämpfung des Spulenrahmens gegeben ist.

Wie bekannt, verfügen die Spulvorrichtungen derartiger Textilmaschinen jeweils über einen schwenkbar gelagerten Spulenrahmen mit zwei Spulenrahmenarmen zum frei rotierbaren Haltern einer Kreuzspule sowie einer Antriebswalze zum reibschlüssigen Rotieren der Kreuzspule. An den Spulenrahmen ist in der Regel eine Dämpfungseinrichtung angeschlossen, die, wie in der Patentliteratur relativ ausführlich beschrieben, verschiedene Ausführungsformen aufweisen kann.

Durch die DE 41 21 780 A1, die DE 195 34 333 B4 und/oder die DE 100 46 603 A1 sind bspw. Spulvorrichtungen von Kreuzspulen herstellenden Textilmaschinen bekannt, bei denen die Dämpfungseinrichtungen für den Spulenrahmen mit einem Hydraulikzylinder ausgestattet sind.

Bei der Dämpfungseinrichtung gemäß DE 41 21 780 A1 weist der Kolben des Hydraulikzylinders einige Durchbrechungen auf, durch die bei Schwingungen des Spulenrahmens ein im Zylinder befindliches Dämpfungsmedium strömen kann, was zu einer relativ guten Dämpfung der Schwingungen des Spulenrahmens führt.

In der DE 195 34 333 A1 ist eine Spulvorrichtung mit einer Spulenrahmen-Entlastungseinrichtung und einer Schwingungsdämpfungseinrichtung beschrieben. Die Schwingungsdämpfungseinrichtung verfügt dabei ebenfalls über einen Hydraulikzylinder, der über einen Hebel an den schwenkbar gelagerten Spulenrahmen angeschlossen ist.

Die in der DE 100 46 603 A1 beschriebene Schwingungsdämpfungseinrichtung arbeitet mit einem Hydraulikzylinder, dessen Dämpfungsmedium eine rheologisch veränderbare Flüssigkeit ist. Das heißt, der Hydraulikzylinder arbeitet mit einer Flüssigkeit, deren Viskosität mittels eines magnetischen Felderzeugers veränderbar und damit das Dämpfungsvermögen einstellbar ist.

Bei Schwingungsdämpfungseinrichtungen, die mit hydraulischen Flüssigkeiten arbeiten, besteht allerdings stets die Gefahr, dass es zu einem Austritt von Flüssigkeit kommt, was oft nicht nur zu einer Verschlechterung des Dämpfungsvermögens sowie einer Verschmutzung des Umfeldes führt, sondern in Textilbetrieben in Verbindung mit Faserstaub auch eine nicht unerhebliche Brandgefahr darstellt.

Des Weiteren sind in der Vergangenheit auch Dämpfungseinrichtungen entwickelt worden, die keine Dämpfungsflüssigkeit benötigen, sondern elektrisch arbeiten.

In der schweizerischen Patentschrift CH 374003 ist bspw. eine Dämpfungseinrichtung für einen Spulenrahmen einer Spülmaschine beschrieben, die einen bestrombaren Elektromagneten aufweist, der eine Ankerplatte beaufschlagt, welche ihrerseits über eine Stange mit dem zu dämpfenden, schwenkbar gelagerten Spulenrahmen in Verbindung steht. Das heißt, bei dieser bekannten Dämpfungseinrichtung wird mittels eines Elektromagneten, der eine bestrombare Spule aufweist, eine Kraftkomponente erzeugt, die eine an den Spulenrahmen angeschlossene ferromagnetische Ankerplatte an ein stationäres Widerlager presst. Das Dämpfungsverhalten dieser Dämpfungseinrichtung ergibt sich folglich aus der mechanischen Reibung zwischen Ankerplatte und Widerlager.

Eine vergleichbare Dämpfungseinrichtung für Spulvorrichtungen von Kreuzspulautomaten ist auch in der DE 100 12 005 B4 beschrieben. Diese bekannte Dämpfungseinrichtung weist ein bewegliches, elektrisch leitfähiges Bauelement auf, das zumindest mittelbar mit dem Spulenrahmen verbunden und derart angeordnet ist, dass das Bauelement berührungslos das Magnetfeld eines stationär angeordneten Magnetsystems schneidet. Die Wirkung der Dämpfungseinrichtung beruht dabei auf der Entstehung von Wirbelströmen in dem elektrisch leitfähigen Bauelement.

Die vorstehend beschriebenen Dämpfungseinrichtungen weisen allerdings den Nachteil auf, dass sie nicht nur die während des Spulbetriebes auftretende Schwingungsenergie ungenutzt vernichten, sondern, wenn die Dämpfungseinrichtungen elektrisch arbeiten, beim Betrieb sogar zusätzliche elektrische Energie benötigen. Auch viele andere Komponenten von Textilmaschinen neigen während des Produktionsbetriebes zu Schwingungen. Diese müssen nicht immer, wie bei den Spulvorrichtungen, durch Dämpfungseinrichtungen aktiv bekämpft werden, sorgen aber trotzdem für Verluste und verschlechtern damit den Wirkungsgrad der Textilmaschine.

Ferner offenbart die WO 97/33024 ein Antriebssystem für eine Textilmaschine, insbesondere eine Web- oder Strickmaschine, zum Antreiben einer Trägheitsmasse über einen Antriebsweg zwischen einer ersten und einer zweiten Endposition. Das Antriebssystem umfasst einen elektrischen Antriebsmotor, Verbindungsmittel, die den Antriebsmotor mit der Masse verbinden, um diese anzutreiben, Speichermittel zum Speichern von elektrischer Energie und Steuermittel zum Anlegen elektrischer Energie an den Antriebsmotor, um dadurch die Masse über einen ersten Abschnitt ihres Antriebsweges von einer der ersten oder zweiten Endpositionen zu beschleunigen. Die Steuereinrichtung verbindet den Antriebsmotor mit der Speichereinrichtung, wodurch, wenn der Antriebsmotor als elektromagnetische Bremse während der Verzögerung der Masse über einen zweiten Abschnitt ihres Antriebsweges in Richtung der anderen der beiden Endstellungen wirkt, der Antriebsmotor zum Aufladen der Speichereinrichtung dient. Der Erfindung liegt damit die Aufgabe zugrunde, eine Vorrichtung zu entwickeln, die es ermöglicht, die an Kreuzspulen herstellenden Textilmaschinen auftretende Schwingungsenergie sinnvoll zu nutzen, das heißt, aus dieser Schwingungsenergie eine Energieform zu generieren, die durch die Textilmaschine wieder nutzbar ist. Diese Aufgabe wird erfindungsgemäß dadurch gelöst, dass die Textilmaschine mit einem elektromechanischen Energiewandler und einem an den elektromechanischen Energiewandler angeschlossenen Energiespeicher ausgestattet ist, dass der elektromechanische Energiewandler während des Produktionsbetriebes an einer Komponente auftretende kinetische Schwingungsenergie in elektrische Energie wandelt und dass der Energiespeicher die elektrische Energie speichert.

Vorteilhafte Weiterbildungen der Erfindung sind Gegenstand der Unteransprüche.

Erfindungsgemäß kann damit die Schwingungsenergie wieder für den Produktionsbetrieb der Textilmaschine eingesetzt werden. Der Energiespeicher kann vorteilhafterweise als wieder aufladbare Batterie ausgebildet sein. Eine Batterie gibt die höchste Flexibilität bei der Speicherung und darauffolgenden Nutzung der Energie. Da die rückgewonnene Energie aber sofort wieder für den Produktionsbetrieb genutzt werden kann, ist es im Zusammenhang mit der vorliegenden Erfindung auch möglich als Energiespeicher einen passend ausgelegten Kondensator oder eine passend ausgelegte Drossel als Energiespeicher zu verwenden.

Die erfindungsgemäße Textilmaschine umfasst eine Spulvorrichtung zur Herstellung einer Kreuzspule mit einem schwenkbar gelagerten Spulenrahmen zur Aufnahme einer Kreuzspule, einer Spulenantriebswalze zur reibschlüssigen Rotation der Kreuzspule und einer Fadenchangiereinrichtung, wobei die Spulvorrichtungen jeweils mit dem elektromechanischen Energiewandler ausgestattet sind.

Bei der Ausstattung von Spulvorrichtungen mit dem elektromechanischen Energiewandler wird nicht nur zuverlässig verhindert, dass es während des Spulbetriebes der Kreuzspulen herstellenden Textilmaschine an den Spulenrahmen zum Auftreten größerer, unzulässiger Schwingungen kommen kann, sondern die anstehende Schwingungsenergie sinnvoll genutzt wird. Das heißt, bei der erfindungsgemäß ausgestatteten Spulvorrichtung werden die während des Spulbetriebes an den Spulvorrichtungen auftretenden Vibrationen, die kinetische Schwingungsenergie darstellen, durch den Energiewandler in elektrische Energie gewandelt, die erneut beim Betrieb der Textilmaschine eingesetzt werden kann. Wie oben erläutert, sind die Schwingungen an der Spulvorrichtung besonders ausgeprägt, so dass auch eine vergleichsweise große Menge Energie zurückgewonnen werden kann.

Dabei wandelt der elektromechanische Energiewandler erfindungsgemäß die während des Spinnbetriebes am Spulenrahmen auftretende, kinetische Schwingungsenergie in elektrische Energie um. Das heißt der Spulenrahmen bildet erfindungsgemäß die Komponente, deren Schwingungsenergie in elektrische Energie umgewandelt wird.

In einer vorteilhaften Ausführungsform ist vorgesehen, dass der Energiewandler über eine Mechanik verfügt, die am Spulenrahmen wirksame Schwingungsenergie in eine Rotation umsetzt und diese auf den Antriebsschaft eines Generators überträgt, der dadurch entsprechend rotiert wird. Die Mechanik kann bspw. mit einer Pendeleinrichtung ausgestattet sein, die die während des Spulbetriebes an der Komponente auftretenden Vibrationen in eine Drehbewegung umsetzt, die anschließend vom Generator, wie bekannt, in elektrische Energie gewandelt wird.

In einer weiteren, alternativen Ausführungsform weist der Energiewandler ein Magnetsystem auf, das über ein stationäres und ein beweglich gelagertes Element verfügt. Das vorzugsweise als Permanentmagnet ausgebildete beweglich gelagerte Element ist dabei bspw. über einen Verbindungshebel an den Spulenrahmen der Spulvorrichtung angeschlossen und bezüglich des stationären Elementes axial verschiebbar gelagert. Das heißt, während des Spulbetriebes wird der Permanentmagnet durch die Vibrationen des Spulenrahmens ständig innerhalb des stationären Elementes, das vorzugsweise als Spule ausgebildet ist, bewegt, was zur Erzeugung einer elektrischen Spannung führt, die in einem Energiespeicher zwischengespeichert wird. Solche Magnetsysteme sind nicht nur relativ leistungsfähig, sondern auch verhältnismäßig kostengünstig in der Herstellung, was angesichts der großen Anzahl der Arbeitsstellen von Kreuzspulen herstellenden Textilmaschinen sehr vorteilhaft ist.

Eine weitere vorteilhafte Ausführungsform der Erfindung ist gegeben, wenn der Energiewandler ein piezokeramisches Element aufweist, das über eine Druckübertragungseinrichtung an den Spulenrahmen der Spulvorrichtung der Arbeitsstelle der Textilmaschine angeschlossen ist.

Ein solches piezokeramische Element generiert bei Druckänderung, die bspw. durch Vibrationen des Spulenrahmens ausgelöst und über die Druckübertragungseinrichtung auf das piezokeramische Element übertragen werden, elektrische Energie, die anschließend an den Energiespeicher weitergeleitet wird.

Die Erfindung wird nachfolgend anhand von in den Zeichnungen dargestellten Ausführungsbeispielen näher erläutert.

Es zeigt:
- Fig. 1: eine Arbeitsstelle einer Kreuzspulen herstellenden Textilmaschine in Seitenansicht, deren Spulvorrichtung mit einem erfindungsgemäßen, stark schematisch dargestellten Energiewandler ausgestattetet ist, welcher die während des Spinnbetriebes am Spulenrahmen auftretende kinetische Energie in elektrische Energie wandelt,
- Fig. 2: eine erste Ausführungsform eines erfindungsgemäßen Energiewandlers,
- Fig. 3: eine zweite Ausführungsform eines erfindungsgemäßen Energiewandlers,
- Fig. 4: eine weitere Ausführungsform eines erfindungsgemäßen Energiewandlers.

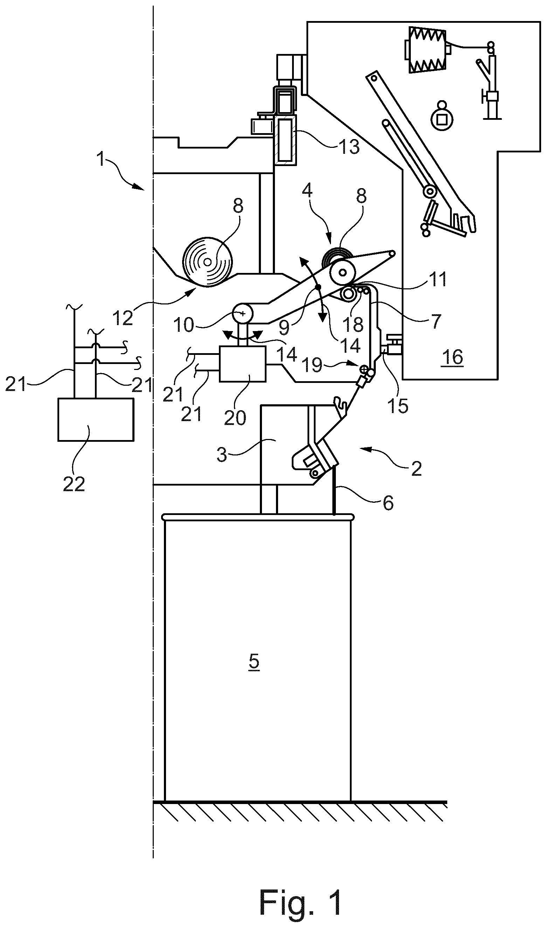

In Figur 1 ist schematisch in Seitenansicht eine Arbeitsstelle 2 einer Kreuzspulen herstellenden Textilmaschine, im Ausführungsbeispiel eine Offenend-Rotorspinnmaschine 1, dargestellt. Derartige Offenend-Rotorspinnmaschinen 1 weisen bekanntermaßen in der Regel eine Vielzahl derartiger, in Maschinenlängsrichtung nebeneinander angeordnet, identischer Arbeitsstellen 2 auf.

Die Arbeitsstellen 2 verfügen dabei unter anderem jeweils über eine Offenend-Rotorspinnvorrichtung 3 sowie über eine Spulvorrichtung 4, wobei in der Offenend-Rotorspinnvorrichtung 3 ein in einer Spinnkanne 5 vorgelegtes Faserband 6 zu einem Faden 7 gesponnen, der anschließend auf der Spulvorrichtung 4 zu einer Kreuzspule 8 aufgewickelt wird.

Die Spulvorrichtungen 4 sind jeweils mit einem schwenkbar gelagerten Spulenrahmen 9 ausgestattet, das heißt, mit einem Spulenrahmen 9, dessen Spulenarme um einen Drehpunkt 10 begrenzt beweglich gelagert sind. Zwischen den Spulenrahmenarmen ist eine Leerhülse beziehungsweise eine Kreuzspule 8 frei drehbar gehaltert, wobei die Kreuzspule 8 während des Spulbetriebes auf einer Spulenantriebswalze 11 aufliegt und von dieser reibschlüssig angetrieben wird. Des Weiteren umfasst die Spulvorrichtungen 4 eine Fadenchangiereinrichtung 18 zur Verlegung des Fadens auf der Kreuzspule 8.

Erfindungsgemäß ist an den Spulenrahmen 9 außerdem ein Energiewandler 20 angeschlossen, der seinerseits über Energieleitungen 21 an einen Energiespeicher 22 der Textilmaschine angeschlossen ist.

Derartige Arbeitsstellen 2 verfügen des Weiteren über eine etwas oberhalb der Offenend-Rotorspinnvorrichtung 3 angeordnete Fadenabzieheinrichtung 19.

Außerdem weisen solche Offenend-Rotorspinnmaschinen 1 in der Regel eine zwischen den Arbeitsstellen 2 angeordnete, maschinenlange Kreuzspulentransporteinrichtung 12 zum Entsorgen fertiggestellter Kreuzspulen 8 auf.

An beziehungsweise auf den Offenend-Rotorspinnmaschinen 1 sind des Weiteren oft, an einer Führungsschiene 13 sowie einer Stützschiene 15 abgestützt, verfahrbare Serviceaggregate 16 angeordnet. Derartige Serviceaggregate 16 patrouillieren während des Spinn-/Spulbetriebes entlang der Offenend-Rotorspinnmaschine 1 und greifen selbsttätig ein, wenn an einer der Arbeitsstellen 2 ein Handlungsbedarf entsteht.

Ein solcher Handlungsbedarf liegt bspw. vor, wenn an einer der Arbeitsstellen 2 eine Kreuzspule 8 ihren vorgegebenen Durchmesser erreicht hat und gegen eine neue Leerhülse getauscht. Die Serviceaggregate 16 verfügen zu diesem Zweck, wie bekannt, über zahlreiche Handhabungseinrichtungen, die einen ordnungsgemäßen Kreuzspulen-/Leerhülsenwechsel ermöglichen.

Wie vorstehend bereits angedeutet und in Figur 1 lediglich stark schematisch dargestellt, sind die Spulvorrichtungen 4 der Arbeitsstellen 2 außerdem jeweils mit einem erfindungsgemäßen Energiewandler 20 ausgestattet, der verschiedene Ausführungsformen aufweisen kann.

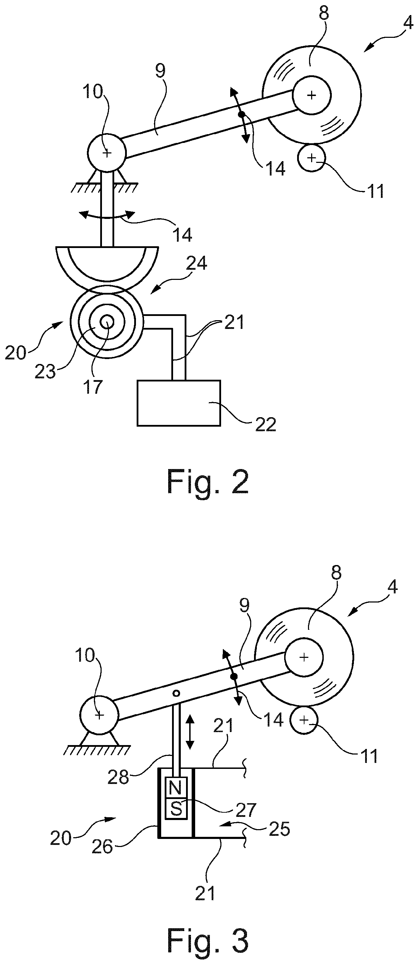

Der Energiewandler 20 kann bspw., wie in Figur 2 dargestellt, über eine Mechanik 24 verfügen, mittels der die während des Spulbetriebes am Spulenrahmen 9 auftretenden, mit dem Bezugszeichen 14 gekennzeichneten Vibrationen, die kinetische Energie darstellen, in eine Drehbewegung gewandelt und an den Antriebsschaft 17 eines Generators 23 übertragen wird. Der Generator 23, der, wie dargestellt, bspw. über Energieleitungen 21 mit einem Energiespeicher 22 des Stromsystems der Offenend-Rotorspinnmaschine 1 verbunden ist, wandelt diese am Spulenrahmen 9 auftretende kinetische Energie 14 in elektrische Energie um, die gespeichert wird und anschließend beim Betrieb der Textilmaschine 1 wieder zur Verfügung steht.

Bei der in Figur 3 dargestellten zweiten Ausführungsform verfügt der Energiewandler 20 über ein Magnetsystem 25, das zwei relativ zueinander beweglich gelagerte Elemente 26, 27 aufweist. Das heißt, bei dieser Ausführungsform verfügt der Energiewandler 20 über ein vorzugsweise als Spule 26 ausgebildetes stationäres Element und ein vorzugsweise als Permanentmagnet 27 ausgebildetes bewegliches Element, wobei zwischen der Spule 26 und dem Permanentmagneten 27, der in Schwingungsrichtung magnetisiert ist, ein möglichst kleiner Spalt gegeben ist.

Das bewegliche Element 27 ist außerdem, zum Beispiel über einen Verbindungshebel 28, an den Spulenrahmen 9 der Spulvorrichtung 4 angeschlossen. Das bedeutet, die während des Spulbetriebes am Spulrahmen 9 wirksamen Vibrationen 14, die kinetische Energie darstellen, werden über den Verbindungshebel 28 auf den Permanentmagneten 27 übertragen, der sich innerhalb der Spule 26 auf und ab bewegt mit der Folge, dass sich das Magnetfeld innerhalb der Spule 26 ständig ändert und dadurch in der Spule 26 ein Strom induziert wird.

Dieser Strom wird über Energieleitungen 21 an einen Energiespeicher 22 der Textilmaschine 1 übertragen und kann, wie vorstehend bereits angedeutet, beim weiteren Betrieb der Textilmaschine 1 Verwendung finden.

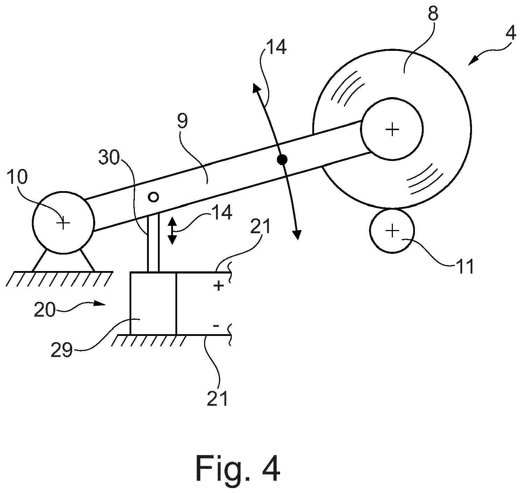

Bei einer weiteren, anhand der Figur 4 dargestellten Ausführungsform kommt ein Energiewandler 20 zum Einsatz, der mit einem Piezokeramikelement 29 ausgestattet ist, das über eine Druckübertragungseinrichtung 30 an den Spulenrahmen 9 der Spulvorrichtung 4 angeschlossen ist. Während des Spulbetriebes werden die am Spulenrahmen 9 auftretenden Vibrationen über die Druckübertragungseinrichtung 30 als äußere Kräfte auf das Piezokeramikelement 29 übertragen, was bekanntlich dazu führt, dass sich an der Ober- bzw. Unterseite des Piezokeramikelements 29 elektrisch geladene Bereiche bilden. Das heißt, die Verformung des Piezokeramikelements 29 durch äußere Kräfte führt dazu, dass sich im Material des Piezokeramikelements 29 ständig die Polarisation ändert und ein elektrisches Feld entsteht, was auch als direkter piezoelektrischer Effekt bezeichnet wird.

Das elektrische Feld kann mithilfe von Elektroden zur Stromerzeugung benutzt werden, wobei der Strom über Energieleitungen 21 an den Energiespeicher 22 weitergeleitet wird.

In der Praxis generiert das Piezokeramikelement 29 des Energiewandlers 20 aus Druckänderungen, die durch den am Spulenrahmen 9 angeordnete Druckübertragungseinrichtung 30 auf das Piezokeramikelement 29 übertragen werden und die durch Vibrationen des Spulenrahmens 9 entstehen, elektrische Energie, die zum Beispiel beim Betrieb der Textilmaschine 1 wieder benutzt werden kann.

### Bezugszeichenliste

- 1: Offenend-Rotorspinnmaschine
- 2: Arbeitsstelle
- 3: Offenend-Rotorspinnvorrichtung
- 4: Spulvorrichtung
- 5: Spinnkanne
- 6: Faserband
- 7: Faden
- 8: Kreuzspule
- 9: Spulenrahmen
- 10: Drehpunkt
- 11: Spulenantriebswalze
- 12: Kreuzspulentransporteinrichtung
- 13: Führungsschiene
- 14: kinetische Energie
- 15: Stützschiene
- 16: Serviceaggregat
- 17: Antriebsschaft
- 18: Fadenchangiereinrichtung
- 19: Fadenabzieheinrichtung
- 20: Energiewandler
- 21: Energieleitung
- 22: Energiespeicher
- 23: Generator
- 24: Mechanik
- 25: Magnetsystem
- 26: Spule
- 27: Permanentmagnet
- 28: Verbindungshebel
- 29: Piezokeramikelement
- 30: Druckübertragungseinrichtung

## Patentansprüche

1. Textilmaschine (1) mit Komponenten (4) zur Verarbeitung von Fasern oder Garnen, wobei die Textilmaschine (1) mit einem elektromechanischen Energiewandler (20) und einem an den elektromechanischen Energiewandler (20) angeschlossenen Energiespeicher (22) ausgestattet ist,
wobei der elektromechanische Energiewandler (20) während des Produktionsbetriebes an einer Komponente auftretende kinetische Schwingungsenergie in elektrische Energie wandelt und
wobei der Energiespeicher (22) die elektrische Energie speichert,
**dadurch gekennzeichnet, dass** die Textilmaschine (1) eine Spulvorrichtung (4) zur Herstellung einer Kreuzspule (8) mit einem schwenkbar gelagerten Spulenrahmen (9) zur Aufnahme einer Kreuzspule (8), einer Spulenantriebswalze (11) zur reibschlüssigen Rotation der Kreuzspule (8) und einer Fadenchangiereinrichtung (18) umfasst und
dass die Spulvorrichtung (4) mit dem elektromechanischen Energiewandler (20) ausgestattet ist und
dass der elektromechanische Energiewandler (20) die während des Produktionsbetriebes am Spulenrahmen (9) auftretende kinetische Schwingungsenergie (14) in elektrische Energie wandelt.

2. Textilmaschine (1) nach Anspruch 1, **dadurch gekennzeichnet, dass** der Energiewandler (20) über eine Mechanik (24) verfügt, die die an der Komponente wirksame Schwingungsenergie (14) auf den Antriebsschaft (17) eines Generators (23) überträgt.

3. Textilmaschine (1) nach Anspruch 1, **dadurch gekennzeichnet, dass** der Energiewandler (20) ein Magnetsystem (25) aufweist, das über ein stationäres (26) und ein beweglich (27) gelagertes Element verfügt.

4. Textilmaschine (1) nach Anspruch 3, **dadurch gekennzeichnet, dass** das stationäre Element als Spule (26) ausgebildet ist.

5. Textilmaschine (1) nach Anspruch 3 oder 4, **dadurch gekennzeichnet, dass** als beweglich gelagertes Element ein Permanentmagnet (27) zum Einsatz kommt, der bezüglich der Spule (26) axial verschiebbar gelagert ist.

6. Textilmaschine (1) nach Anspruch 5, **dadurch gekennzeichnet, dass** der Permanentmagnet (27) über einen Verbindungshebel (28) an die Komponente angeschlossen ist.

7. Textilmaschine (1) nach Anspruch 1, **dadurch gekennzeichnet, dass** der Energiewandler (20) ein piezokeramisches Element (29) aufweist, das über eine Druckübertragungseinrichtung (30) an die Komponente angeschlossen ist.

## Claims

1. Textile machine (1) comprising components (4) for processing fibres or yarns,
wherein the textile machine (1) is equipped with an electromechanical energy converter (20) and an energy store (22), which is connected to the electromechanical energy converter (20),
wherein the electromechanical energy converter (20) converts kinetic vibration energy arising at a component during the production operation into electrical energy and
wherein the energy store (22) stores the electrical energy,
**characterised in that** the textile machine (1) comprises a winding apparatus (4) for producing a cross-wound package (8), having: a pivotably mounted package cradle (9) for holding a cross-wound package (8); a package drive roller (11) for rotating the cross-wound package (8) by frictional engagement; and a thread traversing device (18) and that the winding apparatus (4) is equipped with the electromechanical energy converter (20) and
that the electromechanical energy converter (20) converts the kinetic vibration energy (14) arising at the package cradle (9) during the production operation into electrical energy.

2. Textile machine (1) according to claim 1, **characterised in that** the energy converter (20) has a mechanism (24) which transmits the vibration energy (14) active at the component to the drive shaft (17) of a generator (23).

3. Textile machine (1) according to claim 1, **characterised in that** the energy converter (20) has a magnet system (25), which has a stationary element (26) and a movably mounted element (27).

4. Textile machine (1) according to claim 3, **characterised in that** the stationary element is designed as a coil (26).

5. Textile machine (1) according to claim 3 or 4, **characterised in that** a permanent magnet (27) mounted for axial displacement relative to the coil (26) is used as the movably mounted element.

6. Textile machine (1) according to claim 5, **characterised in that** the permanent magnet (27) is connected to the component by means of a connecting lever (28).

7. Textile machine (1) according to claim 1, **characterised in that** the energy converter (20) has a piezoceramic element (29), which is connected to the component by means of a pressure transmission device (30).

## Revendications

1. Machine textile (1) avec des composants (4) pour le traitement de fibres ou fils,
sachant que la machine textile (1) est équipée d'un convertisseur électromécanique d'énergie (20) et d'un accumulateur d'énergie (22) raccordé au convertisseur d'énergie (20),
sachant que le convertisseur électromécanique d'énergie (20) convertit, pendant le fonctionnement, l'énergie d'oscillation cinétique générée sur un composant en énergie électrique et
sachant que l'accumulateur d'énergie (22) stocke l'énergie électrique,
**caractérisé en ce que**, la machine textile (1) comporte un dispositif d'enroulement (4) pour créer une bobine croisée (8) avec un cadre de bobine (9) à roulement pivotant pour la réception d'une bobine croisée (8), d'un rouleau d'entraînement de bobine (11) pour la rotation par friction de la bobine croisée (8) et d'un dispositif de déplacement en va-et-vient (18) et
que le dispositif d'enroulement (4) est équipé du convertisseur électromécanique d'énergie (20) et
que le convertisseur électromécanique d'énergie (20) convertit, pendant le fonctionnement, l'énergie d'oscillation cinétique (14) générée sur le cadre de bobine (9) en énergie électrique.

2. Machine textile (1) selon la revendication 1, **caractérisée en ce que** le convertisseur d'énergie (20) dispose d'un mécanisme (24) qui transmet l'énergie d'oscillation (14) générée sur le composant sur l'arbre d'entraînement (17) d'un alternateur (23).

3. Machine textile (1) selon la revendication 1, **caractérisée en ce que** le convertisseur d'énergie (20) présente un système magnétique (25) qui dispose d'un élément à roulement fixe (26) et d'un élément à roulement mobile (27).

4. Machine textile (1) selon la revendication 3, **caractérisée en ce que** l'élément fixe prend la forme d'une bobine (26).

5. Machine textile (1) selon la revendication 3 ou 4, **caractérisée en ce qu'**un aimant permanent (27) est utilisé en tant qu'élément à roulement mobile, placé de manière à pouvoir être décalé axialement par rapport à la bobine (26).

6. Machine textile (1) selon la revendication 5, **caractérisée en ce que** l'aimant permanent (27) est raccordé, par un levier de raccordement (28) aux composants.

7. Machine textile (1) selon la revendication 1, **caractérisée en ce que** le convertisseur d'énergie (20) présente un élément piezo-céramique (29) raccordé aux composants par un dispositif de transmission de pression (30).
